# EUROPEAN PATENT SPECIFICATION

(11) **EP 0 355 933 B1**
(45) Date of publication and mention of the grant of the patent: **08.11.1995**
(21) Application number: 89202147.8
(22) Date of filing: 24.08.1989
(51) Int. Cl.: G03B 21/60

(54) **Lenticular arrays for front projection screens and contrast improving method and device**
Linsenanordnungen für Auflichtprojektionsschirme sowie Verfahren und Vorrichtung zur Kontrastverbesserung
Réseaux lenticulaires pour écrans de projection par réflexion et méthode et dispositif d'amélioration du contraste

(30) Priority: 25.08.1988 US 236562
(43) Date of publication of application: 28.02.1990
(73) Proprietor: PHILIPS ELECTRONICS NORTH AMERICA CORPORATION, New York, N.Y. 10017 (US)
(72) Inventor: Bradley, Ralph Hampton, NL-5656 AA Eindhoven (NL)
(74) Representative: Peters, Rudolf Johannes

(56) References cited:
- EP-A- 0 154 053
- GB-A- 734 215
- US-A- 3 492 060
- PATENT ABSTRACTS OF JAPAN, vol. 10, no. 274 (P-498)[2330], 18th September 1986 & JP-A-61 95 330
- PATENT ABSTRACTS OF JAPAN, vol. 11, no. 375 (P-644)[2822] 8th December 1987 & JP-A-62 145 233

## Description

The present invention relates to a screen as defined in the preamble of Claim 1. In apparatus using front projection screens, an image source in front of the screen projects an image onto a screen. The screen reflects light from the image back to viewers in an audience field, also located in front of the screen.

A problem encountered in these front projection systems is that the image contrast is reduced by the presence of ambient light. This is particularly troublesome in those applications in which a dedicated projection room is not practical, for example, projection television for the consumer market. In such cases, the source and character of undesired light such as ambient light is generally unpredictable and uncontrollable.

Image contrast of front projection screens has been increased by various types of blackening to absorb ambient light without interfering with the desired projected light constituting the image. A front projection screen incorporating a lenticular array is known from "Patents Abstracts of Japan", Vol. 11, No 375 (P-644), page 58, Kokai No 62-145233. This publication discloses a screen which comprises a lenticular array at the rearside of a transparent sheet. The tip portions of the array are provided with a reflective layer, while behind the screen a planar absorbing layer is arranged. The desired light is led to the reflecting portions and reflected there. Undesired light is not especially led to those portions and partly incident upon the absorbed layer and prevented from reflection. However, the undesired light is not absorbed to the maximum possible extent, in this type of screen. Part of the undesired light will cross the groove between the lenticules and will be reflected at the adjacent lenticules. Such can be prevented by using black masking that extends into the grooves between the lenticules. For example, a black mask construction is described in U.S. Patent 4,605,283, which discloses black masking that is accomplished by filling a portion of the grooves between the light spreading lenticules with discrete black particles and by containing the particles by means of a skin which extends between the lenticules over the groove. Also the use of absorbing filaments is possible.

The various types of blackening create manufacturing and operating difficulties. Black filaments tend to break and are difficult to position. Particles are difficult to maintain in the groove before being fixed and have a tendency to spread over the tips of the lenticular elements, thereby interfering with the image-forming light. Furthermore, the placement of either filaments or particles within the grooves results in some portion of blackening material touching the sidewalls or being sufficiently close, i.e. within about a µm, that the overall efficiency of the screen is reduced because a portion of the desired light instead of being reflected is absorbed.

It is an object of the present invention to provide a lenticular array with blackening which is simple to apply, will maintain its shape and position and is both reliable and effective. Further, use of the blackening should not result in decreased efficiency with respect to the desired light.

To that end, the front projection screen in accordance with the present invention is characterized by the characterizing portion of Claim 1.

The lenticular surface has a plurality of lenticules separated by grooves, each lenticule having a base portion and a tip portion, and is provided with a light absorbent plate opposite the tip portions, so that the light absorbent surface absorbs undesired light passing through the lenticule. The lenticule has at least one light-reflecting (mirrored) portion at its tip, so that desired light incident on the mirrored portion is reflected back to an audience space. The light absorbent plate has protruding light absorbent ribs which extend into the grooves. The ribs may be low relative to the depth of the grooves, or may be as high as the depth of the grooves. The essential feature of the ribs is that they do not touch the sides of the lenticular, and not approach touching the sides of the lenticulars, so that total internal reflection of the desired light is not frustrated.

The combination of the above-described lenticular array with the blackening structure or surface may constitute, for example, a front projection screen in or for a television receiver. The front projection screen can also be applied in conjunction with a conventional film or slide projector.

Further features of the invention will become obvious from the following description, taken in conjunction with the drawings.
Fig. 1 illustrates the horizontal light distribution created in response to projected rays by a lenticular array having a blackening structure in accordance with the present invention;
Fig. 2 shows absorption of ambient light in the screen of Fig. 1; and
Fig. 3 illustrates a lenticular array with an alternative blackening structure.

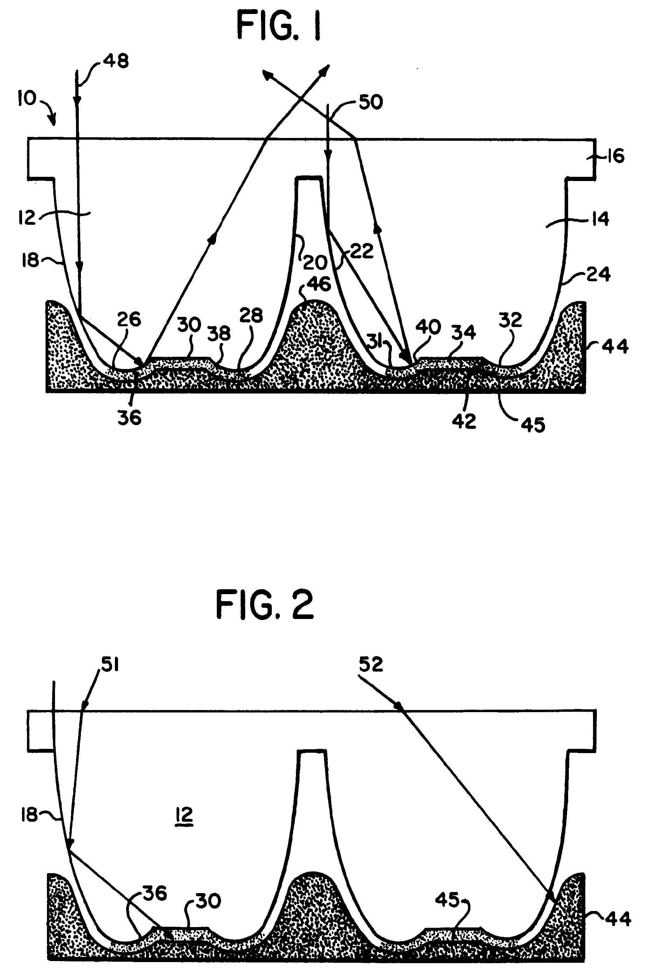

In Fig. 1 a lenticular array, generally designated by reference numeral 10, includes a first lenticule 12 and a second lenticule 14. The base 16 of the array is positioned towards the front of the screen, i.e. facing both the audience and the projected rays which are to constitute the image to be shown to the audience. The sides 18 and 20 of lenticule 12, as well as the sides 22 and 24 of lenticule 14 provide total internal reflection (TIR) for projected rays.

The tip portion of lenticule 12 includes arc-shaped portions 26, 28 respectively contiguous to sides 18 and 20, and a flat section 30 connecting sections 26 and 28. Similarly, lenticule 14 has curved portions 30 and 32, joined by a flat portion 34. This particular tip shape is only one example of possible configurations.

The side walls are curved to concentrate the projected light onto the tip region.

As illustrated, the light from each side wall strikes a different half of the tip region, i.e. desired light reflected by sidewall 18 hits only section 26, while light reflected by sidewall 20 impinges only on section 28. Silvering to create a reflecting surface is applied to areas 36 and 38, respectively facing side 18 and side 20, and constituting the portions of sections 26 and 28 on which the desired light is to be concentrated. The straight portion 30 can be eliminated or changed in shape without affecting the above-described functioning. Also, the shape of those portions of 26 and 28 onto which desired light is not concentrated can be changed without affecting the functioning. It is sufficient that the portions 36 and 38 have the proper position and shape to reflect the desired light into the audience space.

The selective deposition of the silver or other reflecting means to create mirrored portions 36 and 38 can be achieved by methods which are well known in the art. For example, photoresist can be applied to the entire tip area. An intense light source placed in the position corresponding to the position the projector will be placed in the end use application exposes the portion of the tip which is to retain the reflecting material. Silver is applied by chemical means to the tip and the unexposed photoresist is chemically removed. Other methods will be readily apparent to one skilled in the art.

The black plastic molded structure which constitutes one embodiment of the blackening structure according to the present invention is designated by reference numeral 44. Adhesive 45 may be interposed between lenticular array 10 and blackening structure 44 to prevent relative movement between the blackening structure and the lenticules.

The adhesive will also be helpful in reducing the reflections of ambient light rays striking section 30 so that nearly all rays are transmitted through the adhesive and into the light-absorbing plastic if the refractive index of the absorbing material, and the material of which the lenticular array is made are within 0.3 of the refractive index of the adhesive. If the refractive indices of the materials are matched, there will not be any reflections of these light rays, in accordance with Fresnel's laws of transmission and reflection of light rays, and the lenticulars may be said to be optically coupled to the light-absorbing material by the adhesive. The adhesive may itself be light absorbing, but that is unnecessary.

It will be noted that the blackening structure of Figs. 1, 2, 3 has a complementary shape to the lenticules insofar as the tip portion is concerned and that it extends into but does not fill the space between the side wall surfaces, e.g. 20 and 22. Thus there is an array of light absorbing ribs, 46, projecting into the groove between adjacent lenticules without making contact with either side.

As is illustrated in Fig. 1, a light ray 48, a projected ray, impinges on wall 18 at an angle for total internal reflection, is reflected onto surface 36 which is silvered or provided with other reflective coating, and returns through the lenticule to exit towards the audience space. A ray 50, parallel to ray 48, impinges on side 22 of lenticule 14, again at an angle for total internal reflection. It is reflected towards silvered portion 40, and reflected by silvered portion 40 back through the lenticule towards the audience. The desired light, namely the projected rays, will all impinge upon the respective sides of lenticules 12 and 14 from a direction substantially perpendicular to base 16 of the array in the two dimensional cross section, but may be inclined in the vertical direction. The projected rays will therefore be reflected as illustrated and efficiently create a light distribution in the audience space. The required spreading of light in the vertical direction may be accomplished by a horizontal lenticular array on the front surface of the lenticular, i.e. on the opposite side of the sheet containing the rear facing TIR array, or on a separete sheet between the TIR array sheet and the projector, or by a small amount of diffusion, either in the bulk of the screen material or on a surface or by an imbedded horizontal lenticular array (in which case the refractive index of the two contiguous layers of the screen must be different, with the change in refractive index being typically 1 or greater), or a combination of two or more of these means.

In Fig. 2, the same array and blackening structure is illustrated as was illustrated in Fig. 1, but an incident ray of ambient light, 51, is shown. It will be noted that the angle of incidence of this light differs from that of projected ray 48. Ray 51 is also incident on side 18 of lenticule 12 at an angle creating total internal reflection. However, instead of impinging on silvered surface 36, the ray passes through flat surface 30 of the tip and is absorbed by the blackening structure 44. A second incident ray 52 of ambient light passes through lenticule 14 and is also absorbed by the blackening structure 44. It will be noted that projected rays are reflected from the TIR surfaces of the lenticules, onto the silvered portion of the tips and back through the lenticule towards the audience space. On the other hand, ambient light reflected by total internal reflection from the sides of the lenticules impinges onto non-reflective areas of the tips of the lenticules and into blackening structure 44, or it passes through the lenticule also to be absorbed by structure 44. Finally, ambient light may reflect from the first lenticular side wall due to TIR but strike the opposing lenticular side wall at an angle incorrect for TIR and pass through that wall into light-absorbing structure 44.

The finger-shaped portions 46 of the blackening structure 44 improve the efficiency of absorption of unwanted light. Such fingers may extend a portion of the height of the groove between the lenticulars or the full available height, but they should be narrower than the width of the lenticular groove at any height so that they neither touch or approach touching the side walls of the lenticulars. If the minimum separation of the projections from the lenticular sidewalls is greater than about 1.5 times the wavelength of visible light, there will be no loss of efficiency in the intended total internal reflection of desired projected light.

The blackening structure may be prepared using the same precision tooling and replication techniques as are required to produce the TIR lenticular array. Specifically, a second mold is tooled which is complementary to the lenticular array tool as regards the tip portion but which will replicate a protruding finger or rib portion which is narrower and may not be as high as the depth of the groove with which it will be mated. From this tool a surface is replicated in a medium which, aside from its light-absorbing property, has properties similar to those of the plastic of which the TIR lenticular array is replicated. Such a light-absorbing medium may be made by dispersing black particles in a medium of the same material of which the lenticular array is made. Light rays readily pass into the transparent medium but upon encountering a black particle are most often absorbed. If the medium in which the light-absorbing particles are embedded is the same material, e.g. polymethylmethacrylate, as the medium for the lenticular array, the coefficients of expansion for temperature and moisture changes are similar and warpage of the screen caused by ambient changes is avoided.

To join the lenticular array and light absorbent structure, the two are aligned, the complementary tip portions of the two surfaces being preferably adhered together. Adhesion may be provided by contact adhesive, ultraviolet cured adhesive, heat activated adhesive, microwave radiation activated adhesion, direct bonding, solvent bonding, or other adhesive means.

Specifically, the mating between the lenticular array and the blackening structure can be accomplished as follows. First, the edges of two mating grooves and ribs are mated. Then the two sheets are mated by successively bringing the next rib and groove into contact until the entire surfaces are joined. The process is analogous to the operation of a zipper. The alignment of each subsequent rib and groove is assured by the mated alignment of each preceding groove and rib pair. In practice this can be accomplished by beginning with one piece rolled about a cylinder of appreciable diameter (to avoid undue stress on the part). The sheet may be held by a vacuum platen technique if the obverse side is plane, with the ribs or lenticulars parallel to the axis of the cylinder and opposite the side adjacent to the cylinder surface. The other piece can be laid onto a flat surface. Once the first rib and groove pair are mated, rolling the cylinder while applying pressure will mate the surfaces together. The opposing surface must be permitted to slide along as the mating process continues (it can be laid on a table equipped with an air bearing slide), or the cylinder can be translated as it is rotated. If a final screen with an arc shape in horizontal cross section is desired, as is suggested in the parent case, the second sheet can be laid on a curved platform which has approximately the desired radius of the final completed screen. Maintaining a curved cross section can be facilitated by designing the pitch of the blackening structure equipped with ribs to be slightly greater than that for the lenticular array (for the same conditions of temperature and humidity). When curvature of the assembled screen is correct, the pitches will match because the curvature will reduce the effective pitch of the blackening rib structure while increasing the pitch of the lenticular portion. Subsequent to initial fabrication, the screen may be adhered by conventional means to either a curved or flat substrate.

The reflective coating, e.g. silvering, required in the tip region of each TIR lenticule should be applied prior to the above described mating procedure.

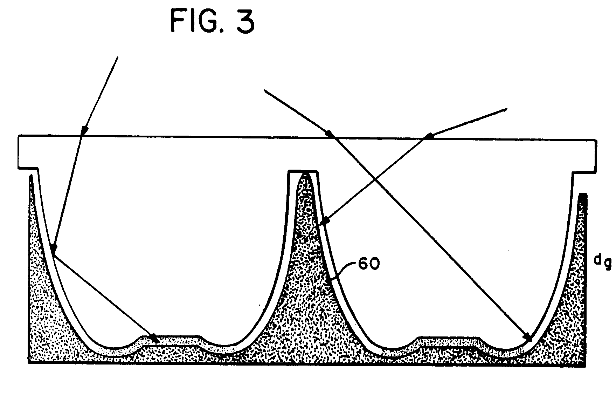

An alternative embodiment of the present invention is illustrated in Fig. 3. The portion of the blackening structure opposite the tip portion of the lenticules is identical to the corresponding portions shown in Figs. 1 and 2. However, the ribs which fit into the grooves between adjacent lenticules are elongated so as to be substantially as tall as the grooves are deep. Again, there is no contact between the side surfaces on the one hand, and the blackening ribs on the other hand. This embodiment gives the highest possible degree of contrast while having minimal impact on the efficiency of the TIR operation.

The dimensions of the lenticules and the blackening structure depend on the particular application. However, typical dimensions are:

### Lenticular Array:

pitch (tip-to-tip distance): .25 - 1.5 mm
height of lenticule: .5 - 5.0 mm

### Blackening Structure:

depth of base (distance from highest dimension of lenticule to bottom of structure): < 5 mm
thickness of light absorbing plate: film or solid structure of desired thickness.

Variations in shape of the lenticule, as well as variations in the above dimensions, are all encompassed by the present invention. The invention is concerened with creating a method and apparatus for blackening lenticular arrays which overcome the disadvantages of the presently known methods, and with a method and apparatus for providing the path of projected light to an audience space by means of light-reflecting portions in the tips of the lenticules.

Although the shape of the blackening structure preferably corresponds substantially to the shape of the lenticule in the tip region, this correspondence is not necessarily required. Where manufacturing difficulties exist, or where other considerations make variations in the shape desirable, such variations can readily be accommodated.

Thus, while the invention has been schematically illustrated in preferred embodiments, it is not to be limited to such embodiments, since other modifications of the basic invention will be evident to those skilled in the art. All such variations are intended to be covered by the following claims.

## Claims

1. A front projection screen with a front surface and a rear surface, comprising at its rear surface a lenticular array (10) constituted by a plurality of lenticules (12; 14) each having a first side (18; 22), a second side (20; 24) and a tip portion (26, 28, 30; 31, 32, 34) joining said first and second side, mainly the tip portions (26, 28, 30; 31, 32, 34) being provided with a reflecting material (36, 38; 40, 42) for reflecting desired light (48; 50) incident thereon to an audience space, the first and second sides providing total internal reflection for desired light incident thereon while allowing undesired light to pass therethrough, and sequential lenticules (12, 14) being spaced by a groove, and the screen further comprising light absorbing means (44) located at the rear surface for absorbing the undesired light (51; 52) incident on the screen, characterized in that the light absorbing means (44) comprise an absorbing plate having a base of a solid structure and a plurality of light-absorbing ribs (46) protruding from said base into said grooves with clearance from the groove walls.

2. A front projection system as claimed in Claim 1, characterized in that each groove is defined by a first side (22) of one of said lenticules (14) and by a second side (20) of an adjacent lenticule (12) and has a predetermined depth and that the distance over which a rib (46) extends in its corresponding groove is at the most equal to said depth, the ribs (46) protruding in the grooves with clearance from said first side (22) and said second side (20).

3. A front projection screen as claimed in Claim 1 or 2, characterized in that adhesive means (45) are interposed between the surface of the lenticular array (10) and the absorbing plate (44) of absorbing material.

4. A front projection screen as claimed in Claims 1, 2 or 3, characterized in that the shape of the tips (26, 28, 30; 31, 32, 34) of the lenticular array (10) and the shape of the base of the absorbing plate (44) are complementary to each other.

5. A front projection screen as claimed in one of the preceding Claims, characterized in that the absorbing plate (44) is made of black plastic.

6. A front projection screen as claimed in one of the preceding claims, characterized in that the tip portions of the lenticules comprise a first part (26; 31) contiguous with the first side (18; 22) and a second part (28; 32) contiguous with the second side (20, 24), wherein said first part (26; 31) comprises a first surface and said second part comprises a second surface, the first and the second surfaces being provided with reflective material.

7. A front projection screen as claimed in Claim 6, characterized in that the tip portions further comprise a third part (30; 34) interposed between the first (26; 31) and the second part (28; 32).

8. A front projection screen as claimed in Claim 7, characterized in that the third part (30; 34) is substantially planar.

## Patentansprüche

1. Auflichtprojektionsschirm mit einer Vorderfläche und einer Rückfläche, der auf seiner Rückfläche ein Linsenfeld (10) aus einer Vielzahl von Linsen (12; 14) enthält, die je eine erste Seite (18; 22), eine zweite Seite (20; 24) und einen spitzen Anteil (26, 28, 30; 31, 32, 34) zum Verbinden der ersten und der zweiten Seite enthalten, wobei hauptsächlich die spitzen Anteile (26, 28, 30; 31, 32, 34) mit einem Reflexionswerkstoff (36, 38; 40, 42) zum Zurückwerfen des gewünschten ankommenden Lichts (48; 50) in einen Zuschauerraum versehen sind, die ersten und zweiten Seiten innere Gesamtreflexion für gewünschtes auffallendes Licht bieten, während unerwünschtes Licht durchfallen kann, und sequentielle Linsen (12, 14) durch eine Rille voneinander getrennt sind, und der Schirm außerdem lichtabsorbierende Mittel (44) auf der Rückseite zum Absorbieren des auf den Schirm landendes unerwünschtes Licht (51; 52) enthält, dadurch gekennzeichnet, daß die lichtabsorbierenden Mittel (44) eine Absorptionsplatte mit einer Basis einer Massivstruktur und eine Vielzahl lichtabsorbierender Rippen (46) enthalten, die aus der Basis in die Rillen mit Spielraum von den Rillenwänden hervortreten.

2. Auflichtprojektionsschirm nach Anspruch 1, dadurch gekennzeichnet, daß jede Rille durch eine erste Seite (22) einer der Linsen (14) und durch eine zweite Seite (20) einer benachbarten Linse (12) definiert wird und eine vorgegebene Tiefe hat, und daß der Abstand, über den eine Rippe (46) sich in ihre entsprechende Rille erstreckt, höchstens gleich der Tiefe ist, wobei die Rippen (46) in die Rillen mit Spielraum von der ersten Seite (22) und von der zweiten Seite (20) hervortreten.

3. Auflichtprojektionsschirm nach Anspruch 1 oder 2, dadurch gekennzeichnet, daß Klebmittel (45) zwischen der Oberfläche des Linsenfelds (10) und der Absorptionsplatte (44) aus Absorptionswerkstoff zwischengelegt ist.

4. Auflichtprojektionsschirm nach Anspruch 1, 2 oder 3, dadurch gekennzeichnet, daß die Form der Spitzen (26, 28, 30; 31, 32, 34) des Linsenfelds (10) und die Form der Basis der Absorptionsplatte (44) einander komplementär sind.

5. Auflichtprojektionsschirm nach einem oder mehreren der vorangehenden Ansprüche, dadurch gekennzeichnet, daß die Absorptionsplatte (44) aus schwarzem Kunststoff hergestellt ist.

6. Auflichtprojektionsschirm nach einem oder mehreren der vorangehenden Ansprüche, dadurch gekennzeichnet, daß die spitzen Anteile der Linsen einen ersten Teil (26; 31) anschließend an die erste Seite (18; 22) und einen zweiten Teil (28; 32) anschließend an die zweite Seite (20, 24) enthalten, wobei der erste Teil (26; 31) eine erste Oberfläche und der zweite Teile eine zweite Oberfläche enthalten, wobei die ersten und zweiten Oberflächen mit Reflexionswerkstoff versehen sind.

7. Auflichtprojektionsschirm nach Anspruch 6, dadurch gekennzeichnet, daß die spitzen Anteile außerdem einen dritten Teil (30; 34) zwischen dem ersten (26; 31) und dem zweiten Teil (28; 32) enthalten.

8. Auflichtprojektionsschirm nach Anspruch 7, dadurch gekennzeichnet, daß der dritte Teil (30; 34) im wesentlichen planar ist.

## Revendications

1. Ecran de projection par réflexion avec une surface avant et une surface arrière, comprenant à sa surface arrière un réseau lenticulaire (10) constitué par une pluralité de petites lentilles (12; 14) dont chacune comprend un premier côté (18; 22), un deuxième côté (20; 24) et une partie de sommet (26, 28, 30; 31, 32, 34) unissant le premier côté au deuxième, les parties de sommet (26, 28, 30; 31, 32, 34) principalement étant pourvues d'une matière réfléchissante (36, 38; 40, 42) pour réfléchir la lumière souhaitée (48; 50) qui leur parvient vers un auditoire, le premier côté et le deuxième assurant une réflexion interne totale pour la lumière souhaitée qui leur parvient tout en permettant que la lumière non souhaitée les traverse, et les petites lentilles successives (12, 14) étant séparées par une rainure et l'écran comprenant en plus des moyens absorbant la lumière (44) disposés à sa surface arrière pour absorber la lumière non souhaitée (51; 52) parvenant sur l'écran, caractérisé en ce que les moyens absorbant la lumière (44) comprennent une plaque absorbante ayant une base d'une structure solide et une pluralité de nervures absorbant la lumière (46) faisant saillie sur la base et pénétrant dans les rainures tout en conservant une aisance à l'égard des parois des rainures.

2. Système de projection par réflexion suivant la revendication 1, caractérisé en ce que chaque rainure est définie par un premier côté (22) de l'une des petites lentilles (14) et par un deuxième côté (20) d'une petite lentille adjacente (12) et a une profondeur prédéterminée et en ce que la distance de laquelle une nervure (46) s'étend dans la rainure correspondante est au maximum égale à cette profondeur, les nervures (46) faisant saillie dans les rainures en conservant une aisance à l'égard du premier côté (22) et du deuxième côté (20).

3. Ecran de projection par réflexion suivant la revendication 1 ou 2, caractérisé en ce que des moyens adhésifs (45) sont intercalés entre la surface du réseau lenticulaire (10) et la plaque absorbante (44) de matière absorbante.

4. Ecran de projection par réflexion suivant la revendication 1, 2 ou 3, caractérisé en ce que la forme des sommets (26, 28, 30; 31, 32, 34) du réseau lenticulaire (10) et la forme de la base de la plaque absorbante (44) sont complémentaires l'une de l'autre.

5. Ecran de projection par réflexion suivant l'une quelconque des revendications précédentes, caractérisé en ce que la plaque absorbante (44) est faite de matière plastique noire.

6. Ecran de projection par réflexion suivant l'une quelconque des revendications précédentes, caractérisé en ce que les parties de sommet des petites lentilles comprennent une première partie (26; 31) contiguë au premier côté (18; 22) et une deuxième partie (28; 32) contiguë au deuxième côté (20, 24), la première partie (26; 31) comprenant une première surface et la deuxième partie comprenant une deuxième surface, la première et la deuxième surfaces étant pourvues d'une matière réfléchissante.

7. Ecran de projection par réflexion suivant la revendication 6, caractérisé en ce que les parties de sommet comprennent, en outre, une troisième partie (30; 34) intercalée entre la première partie (26; 31) et la deuxième partie (28; 32).

8. Ecran de projection par réflexion suivant la revendication 7, caractérisé en ce que la troisième partie (30; 34) est sensiblement plane.
